# EUROPEAN PATENT APPLICATION

(11) **EP 2 146 231 A2**
(43) Date of publication of application: **20.01.2010**
(21) Application number: 09251809.1
(22) Date of filing: 16.07.2009
(51) Int. Cl.: G02B 6/00, G02F 1/13357, F21V 8/00, F25D 23/00, G09F 13/00

(54) **Display assembly having a lightguide plate and spatially separate light diffusion and light conversion film and refrigerator using the same**

(30) Priority: 17.07.2008 KR 20080069772
(71) Applicant: Samsung Gwangju Electronics Co., Ltd., Gwangju-city (KR)
(72) Inventor: Jan, Jung Doo, Gwangju (KR)
(74) Representative: Pratt, David Martin

(57) **Abstract**

A display assembly that may be used with an electrical appliance. The display assembly includes a light guide plate (62) having a first surface (62a) and a second surface (62b), an emitting surface (62c) formed from a portion of the first surface, an incident surface (62d) formed from a portion of the second surface, a light diffusion film (63) adjacent to the emitting surface, and a light conversion film (64) adjacent to the incident surface. The light guide plate is made of a substantially transparent material adapted to guide light between the first surface and the second surface. The first surface (62a) is relatively larger than the second surface (62b). The light diffusion film is adapted to substantially uniformly diffuse light from the emitting surface, and the light conversion film is adapted to substantially convert light from a first wavelength to a second wavelength. The light conversion film extends substantially over the portion of the second surface.

## Description

### Cross-Reference to Related Application

This application claims priority under 35 U.S.C. § 119(a) to Korean Patent Application No. 2008-0069772, filed on July 17, 2008 in the Korean Intellectual Property Office, the disclosure of which is incorporated herein by reference in its entirety.

### Field of the Invention

The present invention relates to a display. In particular, the present invention relates to a display providing information regarding an operational state of an electrical appliance.

### Background of the Invention

Generally, an electrical appliance, such as a refrigerator, can be equipped with a display provided on an outer surface thereof. The display provides a user with information regarding the operation of the electrical appliance. The display can be formed from a liquid crystal display (LCD).

The LCD includes an LCD panel and a backlight unit. The LCD panel is made from liquid crystal which is in a state that is between fully liquid and fully solid. The liquid crystal is injected between thin glass plates. The amount of light that passes through the glass plates and the liquid crystal depends on the arrangement of molecules of the liquid crystal. Applying electricity or electrical current changes the arrangement of the molecules in the liquid crystal changes, and variations in the arrangement of the liquid crystal molecules produce variations in how much light is allowed to pass, thereby generating areas that are relatively brighter and other areas that are relatively darker. Because the LCD panel itself does not emit light, it requires a dedicated backlight unit. Thus, the LCD panel displays an image by applying electricity to vary the liquid crystal molecules, and the backlight unit allows the user to see the image.

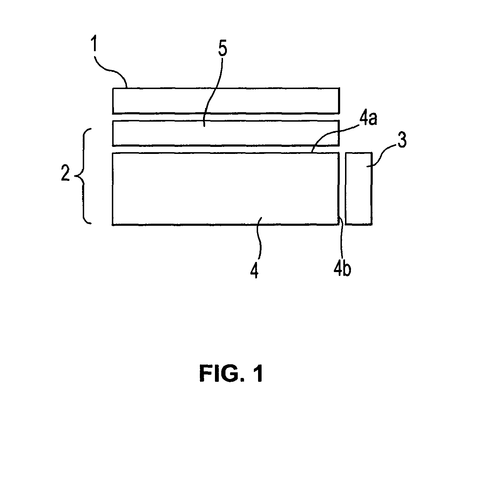

Recently, a need for displays illuminated by white light has developed because such displays are desired for appliances that have a substantially white color, such as refrigerators. Referring to FIG. 1, a conventional LCD type display is shown. The LCD display is illuminated by white light and adapted for use with appliances, such as refrigerators. The conventional LCD display includes an LCD panel 1 and a backlight unit 2 attached to the LCD panel 1.

The backlight unit 2 includes a light emitting diode (LED) 3 and a light guide plate 4. The LED 3 is the light source and emits a pure-color light. The light guide plate 4 guides the light from the LED 3 toward the LCD panel 1. The light guide plate 4 includes an emitting surface 4a adjacent to the LCD panel 1 and an incident surface 4b adjacent to the LED 3. The incident surface 4b receives light from the LED 3, and the emitting surface 4a emits light from the LED 3 onto the LCD panel 1. To efficiently utilize the LED 3, the area of the incident surface 4b should be relatively smaller than the area of the emitting surface 4a. Thus, as shown in FIG. 1, the light guide plate 4 has a cubic form wherein the incident surface 4b is formed on a side that is relatively smaller than the side with the emitting surface 4a.

A composite film 5 is placed between the light guide plate 4 and the LCD panel 1. The composite film 5 is sized to correspond to the emitting surface 4a of the light guide plate 4. The composite film 5 performs a light diffusion function and a light conversion function. In its light diffusion function, the composite film 5 emits light from the emitting surface 4a uniformly to a surface of the LCD panel 1 without causing irregular patterns, and in its light conversion function, the composite film 5 converts the wavelength of the light from the LED 3 to a wavelength corresponding to white light. The term "white light" as used herein refers to light converted from a pure-color light, such as a blue light or a green light from the LED 3, and has near-white color tinged with some other color, such as sky blue or light green.

Known composite films 5 are manufactured by applying a photo conversion material on a diffusion sheet. The photo conversion material is a fluorescent material and a thermochromic material which are capable of converting the wavelength of the pure-color light. The diffusion sheet is made from polyethylene terephthalate (PET) or polycarbonate (PC) film. Thus, conventional LCD type displays have a single composite film 5 that performs both the light diffusion and light conversion functions.

However, single composite films 5 require applying the relatively costly photo conversion material to an entire surface of one side of the film 5. Also, the single composite film 5 is applied to the relatively larger emitting surface 4a of the light guide plate 4 because the composite film 5 must be sized to cover the entire emitting surface 4a. Because of the cost of photo conversion material and the relatively large size required for the composite film 5 to cover the emitting surface 4a, the manufacturing cost of the conventional LCD type display is relatively costly.

### Summary of the Invention

Accordingly, it is an aspect of the invention to provide a display unit that reduces the use of photo conversion material.

An exemplary embodiment of the present invention provides a display assembly. The display assembly includes a light guide plate having a first surface and a second surface, an emitting surface formed from a portion of the first surface, an incident surface formed from a portion of the second surface, a light diffusion film adjacent to the emitting surface, and a light conversion film adjacent to the incident surface. The light guide plate is made of a substantially transparent material adapted to guide light between the first surface and the second surface. The first surface is relatively larger than the second surface. The light diffusion film is adapted to substantially uniformly diffuse light from the emitting surface, and the light conversion film is adapted to substantially convert light from a first wavelength to a second wavelength. The light conversion film extends substantially over the portion of the second surface.

Another exemplary embodiment of the present invention provides a display assembly. The display assembly includes a light guide plate having a first surface and a second surface where the first surface is relatively larger than the second surface, an emitting surface formed from a portion of the first surface, an incident surface formed from a portion of the second surface, a light diffusion film adjacent to the emitting surface, a separate light conversion film adjacent to the incident surface, a display panel adjacent to the light diffusion panel opposite the emitting surface, and a light source disposed adjacent to the light conversion film opposite the incident surface.

Yet another exemplary embodiment of the present invention provides a display assembly on an exterior surface of an electrical appliance and adapted to display information regarding the electrical appliance. The display assembly includes a light guide plate having a first surface and a second surface, an emitting surface formed from a portion of the first surface, an incident surface formed from a portion of the second surface, a light diffusion film adjacent to the emitting surface, and a light conversion film adjacent to the incident surface and extending substantially over the portion of the second surface. The light guide plate is made of a substantially transparent material adapted to substantially guide light between the first surface and the second surface. The first surface is relatively larger than the second surface. The light diffusion film is adapted to substantially uniformly diffuse light from the emitting surface. The light conversion film is adapted to substantially convert light from a first wavelength to a second wavelength that substantially corresponds to a color of the exterior surface of the electrical appliance.

The display assembly of this embodiment may further comprise a light source adjacent the light conversion film. This light source may include a light emitting diode.

The display assembly of this embodiment may be such that the light source emits a substantially pure colour light.

The display assembly of this embodiment may be such that the emitting surface and the incident surface are substantially perpendicular to each other.

The display assembly of this embodiment may be such that the electrical appliance is a refrigerator.

Other aims, advantages and salient features of the invention will become apparent from the following detailed description, which, taken in conjunction with the annexed drawings, discloses a preferred embodiment of the present invention.

### Brief Description of the Drawings

A more complete appreciation of the invention and many of the attendant advantages thereof will be readily obtained as the same becomes better understood by reference to the following detailed description when considered in connection with the accompanying drawings, wherein:

FIG. 1 is a side elevational view of a LCD display according to conventional art;

FIG. 2 is a side elevational view of a display assembly according to an exemplary embodiment of the present invention; and

FIG. 3 is a perspective view of a refrigerator including the display assembly shown in FIG. 2.

### Detailed Description of the Invention

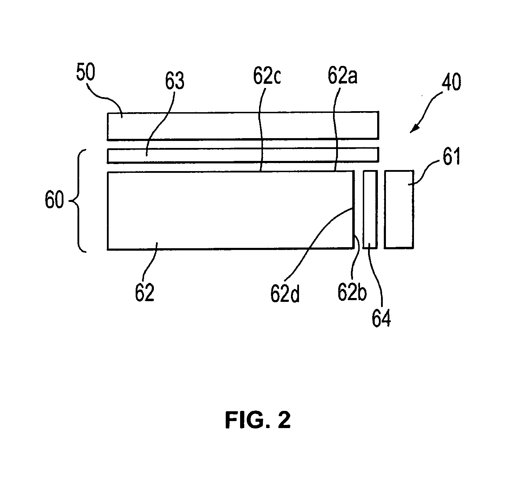

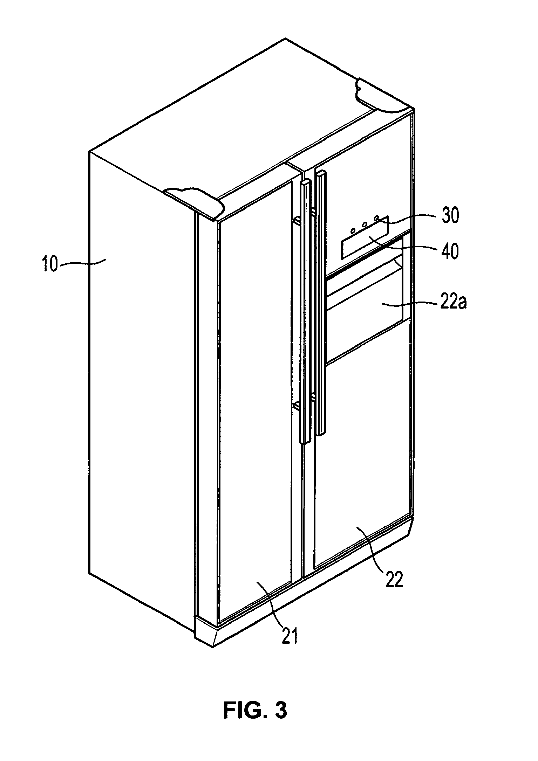

Referring to FIGS. 2 and 3, the invention provides a display assembly 40 that requires less photo conversion material to manufacture and thus reduces the cost of manufacturing the display assembly 40. The display assembly 40 includes two separate films, a light diffusion film 63 and a light conversion film 64, instead of one film to perform the light diffusion function and the light conversion function. By using two separate films 63 and 64, the invention reduces the amount of photo conversion material required and thus reduces the cost of manufacturing the display assembly 40.

Reference will now be made in detail to an exemplary embodiment of the invention, examples of which are illustrated in the accompanying drawings, wherein like reference numbers refer to like elements throughout. Terms such as "front," "forward," "back," "rear," "to the right," "to the left," and other similar terms are not intended to limit the invention. Instead, such terms are used to facilitate describing the positions of components relative to other components.

Referring to FIG. 2, the display assembly 40 is shown. The display assembly 40 includes a display panel 50 and a backlight unit 60. The display assembly 40 is adapted to display images using a light that is generally harmonious with an exterior color of an electrical appliance, such as a refrigerator. The display panel 50 can be made from a liquid crystal display (LCD) or some other display that requires backlighting or lighting that can be adjusted to substantially match a predetermined color. The display panel 50 can also include a decorative bezel or a frame that substantially or partially surrounds an outer periphery of the display panel 50. The bezel or frame can provide mechanical support for the display panel 50 or a decorative exterior. In the embodiment, the display panel 50 is an LCD.

The backlight unit 60 includes a light source 61 that emits light, a light guide plate 62 adjacent to the display panel 50 and the light source 61, a light diffusion film 63 disposed near one surface of the light guide plate 62, and a light conversion film 64 disposed near another surface of the light guide plate 62. The light source 61 emits a light that is substantially guided to the display panel 50 through the light guide plate 62. There may be more than one light source 61. The light source 61 may emit a pure color light. In the embodiment shown, the light source 61 is a plurality of light emitting diodes (LED). The LED emits light having a pure color such as blue or green.

The light guide plate 62 receives light from the light source 61 and generally emits the light onto the display panel 50. The light guide plate 62 has a generally polygonal form with at least two surfaces 62a and 62b. At least one surface 62a has an area that is relatively larger than another surface 62b. A portion of the surface 62a with a relatively larger area forms an emitting surface 62c, and a portion of the surface with a relatively smaller area forms an incident surface 62d. The emitting surface 62c substantially faces toward the display panel 50, and the incident surface 62d substantially faces toward the light source 61. The incident surface 62d receives light from the light source 61, and the emitting surface 62b substantially emits the light. Therefore, the light source 61 emits light that the incident surface 62d receives, the light guide plate 62 generally guides the light to the emitting surface 62c, and the emitting surface 62c substantially emits the light toward the display panel 50. The light guide plate 62 may be formed from glass, plastic such as an acrylic resin, combinations of the aforementioned, or any other suitably rigid material or combination of materials that is substantially transparent.

In the embodiment shown, the light guide plate 62 is made from an acrylic resin that is substantially transparent and is generally formed as a hexahedron that includes one surface 62a that has an area that is relatively larger than another surface 62b. The emitting surface 62c is formed on the surface 62a with the relatively larger area. The emitting surface 62a is coextensive with substantially all of the surface 62a. The incident surface 62d is formed on the surface 62b with the relatively smaller area and extends over substantially all of the surface 62b. In the depicted embodiment, the emitting surface 62c and incident surface 62 are disposed substantially perpendicular to each other. Also, the light source 61 is provided in plural numbers at predetermined intervals near the incident surface 62d such that a portion of the light from the light source 61 shines onto the incident surface 62d.

The light diffusion film 63 substantially diffuses the light from the emitting surface 62c so that the light diffusion film 63 emits light form the emitting surface 62c uniformly to the display panel 50. The light diffusion film 63 can be disposed between the emitting surface 62c of the light guide plate 62 and the display panel 50. The light diffusion film 63 may be formed by applying diffusion ink to at least one surface of a sheet. The sheet can be made from a thermoplastic polymer. In the embodiment shown, the light diffusion film 63 is made from a sheet of polyethylene terephthalate (PET) or polycarbonate (PC).

The light conversion film 64 is separately formed from the light diffusion film 63. The light conversion film 64 substantially converts the wavelength of the light emitted from the light source 61. The light conversion film 64 can be disposed between the incident surface 62d of the light guide plate 62 and the light source 61. The light conversion film 64 may be formed by applying a photo conversion material, such as a fluorescent material and a thermochromic material, to at least one surface of a sheet. The sheet can be made from a thermoplastic polymer. The light conversion film 64 is sized to correspond to the relatively smaller incident surface 62d. Because the display assembly 40 has a separate light diffusion film 63 and light conversion film 64, the size of the light conversion film 64 is independent of the size of the light diffusion film 63. Thus, a relatively smaller light conversion film 64 can be utilized to convert light from the light source 61. Also, because the light diffusion film 64 is disposed between the light source 61 and the relatively smaller incident surface 62d instead of the emitting surface 62c, less light conversion film 64 is needed in comparison to the conventional art. Thus, less of the costly photo conversion material is needed. Therefore, the manufacturing cost of the display assembly 40 may be reduced considerably in comparison to the conventional art.

In the embodiment shown, the light conversion film 64 converts the wavelength of the light from the light source 61 appears generally white light. When an LED that emits a light having a pure color is used as the light source 61, the pure color of the LED light must be converted to a generally white light. As used herein, the term "white light" refers to light having a substantially white color tinged with some color, such as sky blue or light green. In the depicted embodiment, the light conversion film 61 converts the wavelength of the pure color light from the LED, which may be blue or green, to white light. Also, in the depicted embodiment, the light conversion film 63 is made from a sheet of PET or PC.

Referring to FIG. 3, a refrigerator including the display assembly 40 is shown. To simplify the description and to provide an example application, the display assembly 40 is described as being applied to a refrigerator; however, the application of the display assembly 40 is not limited to only refrigerators. The display assembly 40 may be applied to other electronic appliances where the use of photo conversion material can be reduced and thus minimize the manufacturing cost of the display assembly 40.

The refrigerator has a main body 10 defining a storage chamber (not shown), doors 21 and 22 pivotably hinged to the main body 10 to provide access to the storage chamber, components of a refrigerating cycle (not shown) to cool the storage chamber, and the display assembly 40 on an exterior surface of the refrigerator. In the embodiment shown, the doors 21 and 22 are adjacent to each other and when closed, form a front portion of the exterior of the refrigerator with the main body 10 forming the remaining portion of the exterior. Also, the main body 10 and the doors 21 and 22 can be white or near-white in color.

The storage chamber may be partitioned into a freezing chamber and a refrigerating chamber. In the embodiment shown, the freezing chamber is formed substantially to one side of the refrigerator, and the refrigerating chamber is formed substantially to another side of the refrigerator. Accordingly, the doors 21 and 22 can be a freezing chamber door 21 and a refrigerating chamber door 22, respectively, where the freezing chamber door 21 provides access to the freezing chamber, and the refrigerating chamber door 22 provides access to the refrigerating chamber.

Components of refrigerating cycle include an evaporator (not shown), a ventilation fan (not shown), a compressor (not shown), and a condenser (not shown). The evaporator (not shown) and the ventilation fan (not shown) can be installed near the inner rear portion of the storage chamber. The compressor (not shown) and the condenser (not shown) can be installed in a machinery chamber (not shown) formed in the main body 10 and separate from the storage chamber. With these components, air is cooled in the evaporator and circulated through the storage chamber by the ventilation fan. Therefore, food stored in the storage chamber is preserved in a refrigerated or a frozen state by the cooled air.

The display assembly 40 displays information regarding the refrigerator. For example, the display assembly 40 can provide information about the operational state of the refrigerator. In the embodiment shown, the display assembly 40 is mounted on a front surface of the refrigerating chamber door 22. The display assembly 40 can show the current operational state of the refrigerator and the results of any input or changes by the user.

One or more input buttons 30 can also be mounted to an exterior surface of the refrigerator. The one or more input buttons 30 allow a user to provide an input to the refrigerator. For example, one of the input buttons 30 may enable the user to input an operational command. Although buttons 30 are shown, the input buttons 30 can also be knobs, switches, touch sensors, combinations of the aforementioned, or any other electrical or mechanical device that allow a user to provide an input. In the embodiment depicted, the input buttons 30 are arranged near the display assembly 40 and allow the user to control one or more functions of the compressor or the ventilation fan. Thus, the user can adjust the temperature within the freezing chamber or the refrigerating chamber.

The refrigerator can also include a home-bar door 22a. The home-bar door 22a allows a user to retrieve an item, such as a beverage or a water bottle, stored in the refrigerating chamber without opening the refrigerating chamber door 22. In the embodiment shown, the home-bar door 22a is placed below the display assembly 40 on the front surface of the refrigerating chamber door 22.

While a particular embodiment has been chosen to illustrate the invention, it will be understood by those skilled in the art that various changes and modifications can be made therein without departing from the scope of the invention as defined in the appended claims.

## Claims

1. A display assembly, the display assembly comprising:
a light guide plate having a first surface and a second surface and made of a substantially transparent material adapted to substantially guide light between the first surface and the second surface, the first surface being relatively larger than the second surface;
an emitting surface formed from a portion of the first surface of the light guide plate;
an incident surface formed from a portion of the second surface of the light guide plate;
a light diffusion film disposed adjacent to the emitting surface, the light diffusion film adapted to substantially uniformly diffuse light from the emitting surface; and
a light conversion film disposed adjacent to the incident surface and extending substantially over the portion of the second surface, the light conversion film adapted to substantially convert light from a first wavelength to a second wavelength.

2. The display assembly according to claim 1, further comprising a display panel adjacent to the light diffusion film.

3. The display assembly according to claim 2, wherein the display panel includes a liquid crystal display.

4. The display assembly according to claim 1, further comprising a light source adjacent the light conversion film.

5. The display assembly according to claim 4, wherein the light source includes a light emitting diode.

6. The display assembly according to claim 4, wherein the light source emits a substantially pure color light.

7. The display assembly according to claim 1, wherein the emitting surface and the incident surface are substantially perpendicular to each other.

8. A display assembly, the display assembly comprising:
a light guide plate having a first surface and a second surface, the first surface being relatively larger than the second surface;
an emitting surface formed from a portion of the first surface of the light guide plate; an incident surface formed from a portion of the second surface of the light guide plate;
a light diffusion film disposed adjacent to the emitting surface;
a separate light conversion film disposed adjacent to the incident surface;
a display panel disposed adjacent to the light diffusion film opposite the emitting surface; and
a light source disposed adjacent to the light conversion film opposite the incident surface.

9. The display assembly according to claim 8, wherein the emitting surface and the incident surface are disposed substantially perpendicular to each other.

10. The display assembly according to claim 8, wherein the light conversion film has a size substantially corresponding to an area of the second surface.

11. The display assembly according to claim 8, wherein the display panel includes a liquid crystal display.

12. The display assembly according to claim 8, wherein the light source includes a light emitting diode.

13. A display assembly disposed on an exterior surface of an electrical appliance and adapted to display information regarding the electrical appliance, the display assembly comprising:
a light guide plate having a first surface and a second surface and made of a substantially transparent material adapted to substantially guide light between the first surface and the second surface, the first surface being relatively larger than the second surface;
an emitting surface formed from a portion of the first surface of the light guide plate;
an incident surface formed from a portion of the second surface of the light guide plate;
a light diffusion film disposed adjacent to the emitting surface, the light diffusion film adapted to substantially uniformly diffuse light from the emitting surface; and
a light conversion film disposed adjacent to the incident surface and extending substantially over the portion of the second surface, the light conversion film adapted to substantially convert light from a first wavelength to a second wavelength that substantially corresponds to a color of the exterior surface of the electrical appliance.

14. The display assembly according to claim 13, further comprising a display panel adjacent to the light diffusion film.

15. The display assembly according to claim 14, wherein the display panel includes a liquid crystal display.
